Europäisches Patentamt

European Patent Office

Office européen des brevets

(11) Veröffentlichungsnummer: **0 209 082**
A1

# (12) EUROPÄISCHE PATENTANMELDUNG

(21) Anmeldenummer: 86109442.3

(22) Anmeldetag: 10.07.86

(51) Int. Cl.⁴: **C 08 L 83/04**, C 08 L 101/00, C 08 L 27/06, C 08 L 31/04, C 08 L 33/08

---

(30) Priorität: 16.07.85 DE 3525340

(43) Veröffentlichungstag der Anmeldung: 21.01.87 Patentblatt 87/4

(84) Benannte Vertragsstaaten: **AT BE CH DE FR GB LI NL**

(71) Anmelder: **ARA-Werk Krämer GmbH + Co., Wehrstrasse 2-8 Postfach 61, D-7441 Unterensingen (DE)**

(72) Erfinder: **Müller, Dieter, Liebermannstrasse 1/70, D-7440 Nürtingen (DE)**
Erfinder: **Körner, Dieter, Neuffenstrasse 11/7, D-7446 Oberbolhingen (DE)**

(74) Vertreter: **Patentanwälte Ruff und Beier, Neckarstrasse 50, D-7000 Stuttgart 1 (DE)**

(54) **Durch Luftfeuchtigkeit aushärtbare Siliconmasse.**

(57)    Die Erfindung betrifft eine durch Luftfeuchtigkeit aushärtbare Siliconmasse, beispielsweise eine solche, wie sie als Dichtungsmittel und Fugenfüller Verwendung findet. Solche Siliconmassen sind normalerweise sehr schwer überstreichbar bzw. lackierbar. Es wurde gefunden, daß solche Siliconmassen sehr gut mit Farbe überstrichen werden können, wenn sie als Füller ein thermoplastisches Polymer enthalten. Auch die Haftfähigkeit der getrockneten Farbe an der Siliconoberfläche wird dadurch verbessert.

EP 0 209 082 A1

0209082

A 22 891 EP

Anmelderin:     ARA-Werk Krämer GmbH & Co.
                Wehrstraße 2 - 8

                7441 Unterensingen

## Durch Luftfeuchtigkeit aushärtbare Siliconmasse

Die Erfindung betrifft eine durch Luftfeuchtigkeit aushärtbare Siliconmasse, insbesondere ein Dichtungsmittel bzw.
einen Fugenfüller, aus reaktionsfähigem Siliconpolymer,
Weichmacher für Silicon, Vernetzer für Silicon und Füller
sowie ggf. weiteren Hilfsstoffen, wie Haftvermittler und
Katalysatoren.

Derartige Siliconmassen werden im Bauwesen in großem Stil
eingesetzt und zwar im Sanitärbereich, z.B. zur Abdichtung
der Ränder von Badewannen und Waschbecken sowie zur Ausfüllung von Dehnungsfugen, beispielsweise bei gefliesten Wänden. Ein wichtiges Anwendungsgebiet für derartige Siliconmassen ist ferner der Einbau von Fenstern und Türen, insbesondere der nachträgliche Einbau bei der Altbaurenovierung.
Dort werden die Stoßstellen zwischen Fenster- bzw. Türrahmen
und Mauerwerk bzw. Sims mit Siliconmasse abgedichtet.

Die plastische Siliconmasse ist in der Regel in Kartuschen
oder in Plastikschläuchen im Handel und wird bei der Anwendung durch Düsen entsprechenden Querschnitts ausgepreßt.
Unter der Einwirkung von Luftfeuchtigkeit oder Wasser beginnt die Vernetzung der Siliconmasse zunächst an der Oberfläche unter Hautbildung, wonach die Masse allmählich durchreagiert. Die Siliconmasse gibt es in verschiedenartigen Einfärbungen und Standardfarben. Jedoch ist es häufig erwünscht bzw. notwendig, die Siliconmasse nachträglich zu überstreichen, beispielsweise mit Lackfarbe. Hier ergeben sich Schwierigkeiten, weil die Oberfläche der Siliconmasse aufgrund ihrer schlechten Benetzbarkeit die Farbe nicht annimmt, insbesondere dort, wo die Siliconmasse sehr dünn ausgestrichen ist.

Der Erfindung liegt deshalb die Aufgabe zugrunde, einen Weg zu finden, der das Überstreichen einer Siliconmasse ermöglicht.

Diese Aufgabe wird dadurch gelöst, daß bei einer Siliconmasse mit im übrigen üblichen Bestandteilen mindestens ein Teil des Füllers aus thermoplastischen Polymeren in Pulverform besteht.

Bekannte Siliconmassen enthalten normalerweise anorganische Füller, wie Kreiden oder pyrogene Kieselsäure. Sie können auch größere Anteile an Farbpigmenten enthalten. Es wurde nun gefunden, daß durch den Austausch mindestens eines Teils des bisherigen Füllers durch ein thermoplastisches Polymer, das in organischen Lösungsmitteln, die üblicherweise für Lackfarben verwendet werden, löslich oder zumindest quellbar ist, die Benetzung beim Überstreichen von Siliconmassen, insbesondere nach ihrer zumindest oberflächlichen Vernetzung, ohne Probleme möglich ist. Der Füller kann auch vollständig aus dem thermoplastischen Kunststoff oder einem Gemisch verschiedener thermoplastischer Kunststoffe bestehen. Die thermoplastischen Polymere sind mit besonderem Vorteil mit Farblösungsmitteln lösbar oder mit diesen quellbar. Die thermoplastischen Polymerteilchen sind im Siliconpolymer nicht gelöst, sondern liegen vorzugsweise als diskrete Teilchen vor, deren Größe vorzugsweise der von Suspensionspolymerisaten entspricht. Mit Vorteil sind die thermoplastischen Polymere selbst Suspensionspolymerisate. Die als Füller verwendeten thermoplastischen Polymere sind vorzugsweise solche aus Polyvinylchlorid, Polyvinylchlorid/Vinylacetat-Mischpolymer oder Acrylsäureester-Polymere, deren Alkoholkomponente vorzugsweise 2 bis 9 Kohlenstoffatome besitzt. Auch Polyvinylacetat ist geeignet. Diese thermoplastischen Polymere lassen sich durch die üblichen Lösungsmitteln von Lacken, z.B. Ester, Ketone, aromatische Lösungsmittel, wie Toluol, Xylol, Benzine, z.B. 80/120 oder 100/140, lösen oder zumindest anquellen. Dies kann mit Vorteilen noch dadurch erleichtert werden, daß die thermoplastischen Polymere mit Primärweichmachern weichgemacht sind und/oder hochsiedende Lösungsmittel als Anquellvermittler enthalten. Solche Primärweichmacher können beispielsweise Esterweichmacher, wie Phthalatester, sein.

Es hat sich herausgestellt, daß Siliconmassen, die solche thermoplastischen Polymere enthalten, sich mit Lack leicht benetzen lassen und zwar auch an den dünn ausgestrichenen Stellen. Darüber hinaus wird eine gute Haftung des ausgetrockneten Lackes auf der Oberfläche der Siliconmasse erhalten, so daß das spätere Abplatzen nicht zu befürchten ist.

Normale Silicondichtungsmittel enthalten gewöhnlich
    50 Gew.-% Siliconpolymer,
    30 Gew.-% Weichmacher,
    10 Gew.-% Härter bzw. Vernetzer,
    10 Gew.-% Füllstoff, der im Falle eines transparenten
            Dichtungsmittels Kieselsäure ist.

Das Siliconpolymer ist gewöhnlich ein reaktives Flüssigpolymer mit einem Molekulargewicht von 20.000 - 150.000, vorzugsweise etwa 80.000. Der Weichmacher ist in der Regel ein Silicon mit einem Molekulargewicht von 1.000 - 10.000. Es können auch Fremdweichmacher vorgesehen sein. Als Vernetzer werden gewöhnlich Aminosilane und Silanole u.dgl. verwendet, die mit dem Siliconpolymer eine Vernetzungsreaktion ergeben,
z.B. Triacetoxysilan. Weitere Zusätze können noch übliche
Haftvermittler und Katalysatoren, z.B. Dibutylzinndiacetat
in geringen Mengen, sein.

Bei der Erfindung können die bekannten Bestandteile ebenfalls zur Anwendung kommen. Dabei können die als Füllstoff
verwendeten Polymere zusätzlich zum bisherigen Füllstoff
zugegeben werden oder an Stelle des anorganischen Füllstoffs.

Es wurde gefunden, daß es durch die Verwendung der thermoplastischen Polymere als Füllstoff möglich ist, den Füllstoffanteil gegenüber bekannten Formulierungen wesentlich zu
erhöhen und dafür die Siliconbestandteile der Siliconmasse,
d.h. das Siliconpolymer, den Weichmacher und den Vernetzer
in entsprechendem Maße zu verringern. Dies führt zu einer
erheblichen Kosteneinsparung, da die thermoplastischen Polymere kostengünstiger sind als die Siliconbestandteile. Der
Gehalt an Füller in der Siliconmasse liegt deshalb vorzugsweise über 20 Gew.-%. Er liegt mit Vorteil sogar über dem
Gehalt an Siliconpolymer und insbesondere über dem Gesamtgehalt an Siliconpolymer, Siliconweichmacher und Vernetzer.
Dabei kann das Gewichtsverhältnis der Siliconbestandteile
untereinander nämlich das Verhältnis von Siliconpolymer zu
Weichmacher zu Vernetzer im üblichen Bereich von z.B.
100 : 60 : 20 liegen, so daß dieses System keine Änderungen
zu erfahren braucht.

Wie gesagt, besteht der Füller mindestens teilweise oder
vollständig aus thermoplastischem Polymer. Dabei beträgt der
Gehalt an thermoplastischem Polymer in der Gesamtmasse aus
Siliconpolymer, Siliconweichmacher, Vernetzungsmittel und
Füller mit Vorteil mindestens 10 Gew.-%, vorzugsweise mindestens 20 Gew.-%. Dies bedeutet, daß dann, wenn wenig Füller
in der Siliconmasse enthalten ist, dieser vollständig aus dem thermoplastischen Polymer besteht, bei einem höheren Füllergehalt kann neben dem thermoplastischen Polymer auch noch ein anderer üblicher Füller enthalten sein. Der besonders bevorzugte Gehalt an thermoplastischem Polymer in der Gesamtmasse der obengenannten Bestandteile liegt bei 25 bis 75, insbesondere 50 bis 60 Gew.-%.

Die erfindungsgemäße Siliconmasse kann sich somit mit Vorteil wie folgt zusammensetzen:

```
12   - 50 Gew.-%,  vorzugsweise
15   - 30 Gew.-% Siliconpolymer,
 7,5 - 30 Gew.-%,  vorzugsweise
10   - 20 Gew.-% Siliconweichmacher,
 2,5 - 10 Gew.-%,  vorzugsweise
 3   -  7 Gew.-% Vernetzer,
78   - 10 Gew.-%,  vorzugsweise
72   - 43 Gew.-% Füller.
```

Weitere Merkmale der Erfindung ergeben sich aus den nachfolgenden Beschreibungen von bevorzugten Ausführungsformen, die jedoch beschränkend sind.


## Beispiel 1

Eine Siliconmasse wird aus 25 Gew.-% Siliconpolymer, 15 Gew.-% Weichmacher, 5 Gew.-% Vernetzer und 55 Gew.-% PVC-Suspensionspolymer formuliert. Die Masse kann in üblicher Weise verarbeitet werden. Nach der Verarbeitung ist die Masse ohne Schwierigkeiten lackierbar, da der Lack in der Lage ist, die Oberfläche vollständig zu benetzen.

## Beispiel 2

| | |
|---|---:|
| Siliconpolymer | 26,9 % |
| Siliconweichmacher | 17,3 % |
| Siliconstabilisator | 0,9 % |
| Siliconvernetzer | 4,5 % |
| Haftvermittler | 0,9 % |
| thermoplastisches Polymerpulver | 49,3 % |
| Katalysator | 0,1 % |
| UV-Stabilisator | 0,1 % |

## Beispiel 3

| | |
|---|---:|
| Siliconpolymer | 26,9 % |
| Siliconweichmacher | 17,3 % |
| Siliconstabilisator | 0,9 % |
| Siliconvernetzer | 4,5 % |
| Haftvermittler | 0,9 % |
| Katalysator | 0,1 % |
| thermoplastisches Polymerpulver | 44,3 % |
| Quellmittel für thermoplastisches Polymerpulver | 5,0 % |
| UV-Stabilisator | 0,1 % |

## Beispiel 4

| | |
|---|---|
| Siliconpolymer | 26,9 % |
| Siliconweichmacher | 17,3 % |
| Siliconstabilisator | 0,9 % |
| Siliconvernetzer | 4,5 % |
| thermoplastisches Polymerpulver | 44,2 % |
| Quellmittel für thermoplastisches Polymerpulver | 5,0 % |
| Netzmittel | 0,1 % |
| UV-Stabilisator | 0,1 % |

## Beispiel 5

| | |
|---|---|
| Siliconpolymer | 26,9 % |
| Siliconweichmacher | 17,3 % |
| Siliconstabilisator | 0,9 % |
| Siliconvernetzer | 4,5 % |
| Haftvermittler | 0,9 % |
| thermoplastisches Polymerpulver | 40,0 % |
| nochdisperse Kieselsäure | 4,3 % |
| Netzmittel | 0,1 % |
| Quellmittel für thermoplastisches Polymerpulver | 5,0 % |
| UV-Stabilisator | 0,1 % |

Die %-Angaben sind jeweils Gewichts-%. Das thermoplastische Polymerpulver ist vorzugsweise PVC-Pulver mit einem K-Wert von 50 - 80 und einer Korngröße von kleiner als 50 µm oder Acrylsäureesterpolymerpulver mit einer Korngröße von kleiner als 50 µm.

Quellmittel sind hochsiedende aliphatische oder aromatische Lösungsmittel bzw. Weichmacher, wie Alkylsulfonsäureester, Phtalatester usw.

Als Netzmittel dienen z.B. polyethermodifizierte Siloxane.

Bei den Beispielen 2 bis 5 wurde jeweils von der gleichen Silicon-Grundmischung ausgegangen. Es können auch andere Mischungen verwendet werden.

———

0209082

A 22 891 EP

Anmelderin:     ARA-Werk Krämer GmbH & Co.
                Wehrstraße 2 - 8

                7441 Unterensingen


A N S P R Ü C H E

- - - - -

## Durch Luftfeuchtigkeit aushärtbare Siliconmasse

1. Durch Luftfeuchtigkeit aushärtbare Siliconmasse, insbesondere Dichtungsmittel bzw. Fugenfüller, aus reaktionsfähigem Siliconpolymer, Weichmacher für Silicon, Vernetzer für Silicon und Füller sowie ggf. weiteren Hilfsstoffen, wie Haftvermittler und Katalysatoren, dadurch gekennzeichnet, daß der Füller mindestens zum Teil aus mindestens einem thermoplastischen Polymer in Pulverform besteht.

2. Siliconmasse nach Anspruch 1, dadurch gekennzeichnet, daß die thermoplastischen Polymerteilchen im Siliconpolymer ungelöst vorliegen.

3. Siliconmasse nach Anspruch 1 oder 2, dadurch gekennzeichnet, daß das thermoplastische Polymer ein Suspensionspolymerisat ist.

- 2 -

4. Siliconmasse nach einem der vorhergehenden Ansprüche, dadurch gekennzeichnet, daß das thermoplastische Polymer Polyvinylchlorid, ein Acrylsäureester-Polymer, dessen Alkoholkomponente 2 - 9 Kohlenstoffatome besitzt, Polyvinylacetat und/oder ein Polyvinylchlorid-Polyvinylacetat-Mischpolymer ist.

5. Siliconmasse nach einem der vorhergehenden Ansprüche, dadurch gekennzeichnet, daß das thermoplastische Polymer mit Primärweichmachern und/oder hochsiedenden Lösungsmitteln versetzt ist.

6. Siliconmasse nach einem der vorhergehenden Ansprüche, dadurch gekennzeichnet, daß der Gehalt an Füller über 20 Gew.-% liegt.

7. Siliconmasse nach einem der vorhergehenden Ansprüche, dadurch gekennzeichnet, daß der Gehalt an Füller größer ist als der an Siliconpolymer, vorzugsweise mindestens so groß ist wie der Gesamtgehalt an Siliconpolymer, Siliconweichmacher und Vernetzer.

8. Siliconmasse nach einem der vorhergehenden Ansprüche, dadurch gekennzeichnet, daß der Gehalt an thermoplastischem Polymer mindestens 10 Gew.-%, vorzugsweise mindestens 20 Gew.-%, bezogen auf die Gesamtmenge aus Siliconpolymer, Siliconweichmacher, Vernetzungsmittel und Füller beträgt.

9. Siliconmasse nach einem der vorhergehenden Ansprüche, dadurch gekennzeichnet, daß sie

12   - 50 Gew.-%, vorzugsweise
15   - 30 Gew.-% Siliconpolymer,
 7,5 - 30 Gew.-%, vorzugsweise
10   - 20 Gew.-% Siliconweichmacher,
 2,5 - 10 Gew.-%, vorzugsweise
 3   -  7 Gew.-% Vernetzer  und
78   - 10 Gew.-%, vorzugsweise
72   - 43 Gew.-% Füller  sowie
ggf. weitere übliche Zusatzstoffe

enthält.

10. Verwendung von pulverförmigen thermoplastischen Polymeren als Zusätze in durch Luftfeuchtigkeit aushärtbaren
Siliconmassen zur Verbesserung der Überstreichbarkeit
mit Farben.

- - - - - -

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 711 570  (R.N. LEWIS)<br><br>* Ansprüche 1, 4; Spalte 3, Zeile 53 - Spalte 4, Zeile 25; Spalte 4, Zeilen 45-58 * | 1,2,4-6,8 | C 08 L  83/04<br>C 08 L 101/00<br>C 08 L  27/06<br>C 08 L  31/04<br>C 08 L  33/08 |
| X | DE-B-2 720 534<br>(POLYCHEMIE-GMBH)<br>* Anspruch 1; Beispiel 2 * | 1,2,6,8 | |
| A | EP-A-0 093 918  (TEROSON GMBH)<br>* Ansprüche 1, 3, 4; Seite 2, Zeilen 15-21; Seite 7, Zeilen 15-22 * | 1,10 | |
| A | EP-A-0 012 825  (TH. GOLDSCHMIDT AG)<br>* Zusammenfassung * | 1,4,7 | RECHERCHIERTE SACHGEBIETE (Int. Cl.4) |
| A | DE-A-2 459 816  (GENERAL ELECTRIC CO.)<br>* Ansprüche 1, 7, 9, 11, 18, 19 * | 1,4 | C 08 L  27/06<br>C 08 L  31/04<br>C 08 L  33/08<br>C 08 L  83/04<br>C 08 L 101/00 |
| A | EP-A-0 045 641  (TORAY SILICONE CO., LTD.)<br>* Ansprüche 1, 2; Seite 6, Zeilen 10-12 * | 1,4 | |

Der vorliegende Recherchenbericht wurde für alle Patentansprüche erstellt

| Recherchenort | Abschlußdatum der Recherche | Prüfer |
|---|---|---|
| BERLIN | 13-10-1986 | HASS C V T |